# EUROPÄISCHE PATENTANMELDUNG

(11) **EP 1 632 376 A2**
(43) Veröffentlichungstag der Anmeldung: **08.03.2006**
(21) Anmeldenummer: 05013118.4
(22) Anmeldetag: 17.06.2005
(51) Int. Cl.: B60J 7/22

(54) **Schiebedachsystem**

(30) Priorität: 03.09.2004 DE 102004042810
(71) Anmelder: ArvinMeritor GmbH, 63128 Dietzenbach (DE)
(72) Erfinder: Boss, Christoph, 60599 Frankfurt (DE); Öchel, Holger, 60388 Frankfurt (DE); Parendier, Oliver, 63526 Erlensee (DE)
(74) Vertreter: Sties, Jochen

(57) **Zusammenfassung**

Ein Schiebedachsystem mit einem Rahmen, einem Deckel (14), der in eine Lüfterstellung verschiebbar ist, und einer Seitenblende (18), die sich in einer Abdeckstellung seitlich unterhalb des Deckels (14) erstreckt, ist dadurch gekennzeichnet, daß die Seitenblende (18) am Rahmen befestigt ist.

## Beschreibung

Die Erfindung betrifft ein Schiebedachsystem mit einem Rahmen, einem Deckel, der in eine Lüfterstellung verschiebbar ist, und einer Seitenblende, die sich in einer Abdeckstellung unterhalb des Deckels erstreckt.

Bei bekannten Schiebedachsystemen kann ein Deckel eine Dachöffnung vollständig oder teilweise freigeben, da er verfahrbar an einer Führungsschiene angebracht ist, die sich an den Seitenrändern der Dachöffnung befindet und Teil des Rahmens ist. Ferner kann eine Lüfterstellung eingenommen werden, indem der Deckel an seinem hinteren Ende ausgestellt wird.

Wenn der Deckel geschlossen wird, besteht die Gefahr, daß in dem immer kleiner werdenden Spalt zwischen Deckel und Dach ein Körperteil eines Fahrzeuginsassen eingeklemmt wird, beispielsweise wenn dieser seine Hand am Rand der Dachöffnung ablegt, um sich vom Frischluftstrom erfrischen zu lassen. Um dies zu verhindern, werden bei bekannten Schiebedachsystemen Einklemmschutzvorrichtungen eingebaut, die z.B. über die Strommessung des Deckelantriebmotors, durch Messung der Ankerdrehzahl, durch Schaltmatten oder Sicherheitskontaktleisten eingeklemmte Gegenstände feststellen und die Schließbewegung des Deckels stoppen. Auch sind Vorrichtungen in Form von Blenden bekannt, die den Zwischenraum zwischen Windabweiser und Führungsschiene am vorderen Rand der Dachöffnung bedecken und beim Schließen des Deckels aus der teilweise oder vollständig geöffneten Stellung einen sicheren Einklemmschutz gewährleisten. Die bekannten Vorrichtungen sind jedoch von begrenzter Wirksamkeit, wenn der Deckel aus der Lüfterstellung geschlossen wird. Aufgrund der dann herrschenden Hebelverhältnisse sprechen die bekannten Einklemmschutzvorrichtungen nicht immer im gewünschten Maße an.

Daher sind Schiebedachsysteme bekannt, bei denen eine Blende vorgesehen ist, die den seitlichen Spalt zwischen Deckel und Dach unzugänglich macht. Aus der DE 34 42 616 A1 ist eine streifenförmige Blende und aus der DE 33 08 065 A1 eine Ziehharmonika-artige Blende bekannt. Beide Blenden sind fest mit dem Deckel verbunden und können deswegen nur bei sog. Schiebe-Hebedächern, bei denen der Deckel beim Zurückfahren unter die feste Dachhaut bewegt wird, und nicht bei sog. Spoiler-Dächern verwendet werden, bei denen der Deckel über die Dachhaut verschoben wird.

Die Aufgabe der Erfindung besteht darin, ein Schiebedachsystem zu schaffen, das einen Einklemmschutz schafft, wenn der Deckel aus der Lüfterstellung geschlossen wird, und das bei einem Spoiler-Dach angewendet werden kann.

Zur Lösung dieser Aufgabe ist erfindungsgemäß bei einem Schiebedachsystem der eingangs genannten Art vorgesehen, daß die Seitenblende am Rahmen befestigt ist. Auf diese Weise verbleibt die Seitenblende im wesentlichen feststehend, wenn der Deckel geöffnet wird. Da die Seitenblende an dem Deckel nicht fest befestigt ist, sondern nur anliegt, kann sie diesen freigeben und ihm somit eine Bewegung über das Fahrzeugdach ermöglichen. Die mit der Erfindung erzielten Vorteile bestehen insbesondere darin, daß das erfindungsgemäße Schiebedachsystem auch bei Spoiler-Dächern angewendet werden kann, da keine feste Koppelung zwischen Seitenblende und Dach besteht und somit ein alleiniges Zurückfahren des Deckels über die Dachhaut ermöglicht ist.

Vorzugsweise ist vorgesehen, daß der Deckel zwischen einer geschlossenen Stellung, der Lüfterstellung und einer geöffneten Stellung verschiebbar ist, daß die Seitenblende zwischen einer versenkten Stellung, der Abdeckstellung, die sie einnimmt, wenn der Deckel sich in der Lüfterstellung befindet, und einer Freigabestellung, die sie einnimmt, wenn der Deckel sich in der geöffneten Stellung befindet, verstellbar ist und daß das Schiebedachsystem einen Windabweiser aufweist, der zwischen einer versenkten und einer angehobenen Stellung verstellbar ist. Da die Seitenblende in der geöffneten Stellung des Deckels die Freigabestellung einnimmt, ist sie nicht der Windströmung ausgesetzt, und es treten keine unerwünschten Nebengeräusche bei der Fahrt auf. Des weiteren ist die Seitenblende in der Freigabestellung nicht sichtbar.

Gemäß der bevorzugten Ausführungsform ist die Seitenblende mit dem Windabweiser durch eine Kulissenführung gekoppelt, und der Windabweiser und die Seitenblende liegen an dem Deckel an; der Windabweiser und die Seitenblende werden passiv in Abhängigkeit von der Verstellung des Deckels bewegt. Durch die Koppelung der Bauteile muß nur der Deckel mechanisch gesteuert werden. Dadurch werden die Kosten und der Platzbedarf verringert.

Die Seitenblende und der Windabweiser dagegen werden vorzugsweise durch Federn bewegt. Die Federn beaufschlagen die Seitenblende und den Windabweiser in eine ausgestellte bzw. angehobene Position, die sie in Abhängigkeit von der Position des Deckels einnehmen. Dies ermöglicht einen geringen Bauaufwand.

Weitere Merkmale und Vorteile der Erfindung ergeben sich aus den Unteransprüchen. Die Erfindung wird nachfolgend anhand der bevorzugten Ausführungsform beschrieben, die in den Zeichnungen dargestellt ist. In den Zeichnungen zeigen:
- Figur 1 schematisch ein Fahrzeugdach mit einem erfindungsgemäßen Schiebedachsystem mit einem Deckel in der Lüfterstellung,
- Figur 2 eine Seitenansicht des Schiebedachsystems mit dem Deckel in der geschlossenen Stellung,
- Figur 3 eine perspektivische Ansicht des Schiebedachsystems mit dem Deckel in der geschlossenen Stellung,
- Figur 4 eine Seitenansicht des Schiebedachsystems mit dem Deckel in der Lüfterstellung,
- Figur 5 eine perspektivische Ansicht des Schiebedachsystems mit dem Deckel in der Lüfterstellung,
- Figur 6 eine Seitenansicht des Schiebedachsystems mit dem Deckel in der geöffneten Stellung, und
- Figur 7 eine perspektivische Ansicht des Schiebedachsystems mit dem Deckel in der geöffneten Stellung.

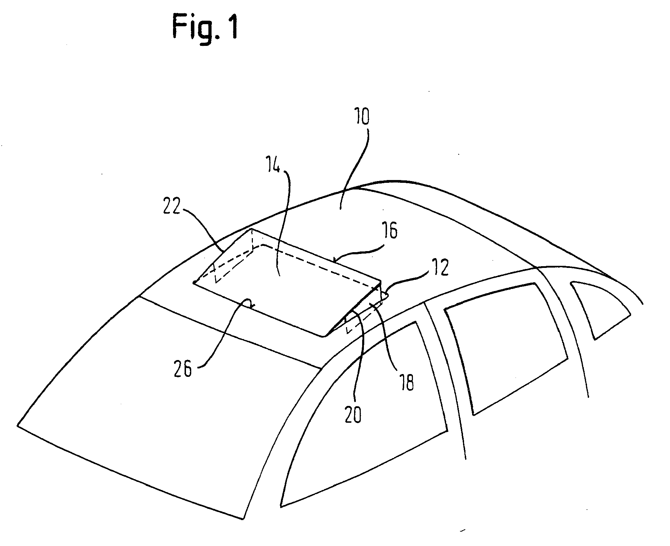

Figur 1 zeigt ein Fahrzeugdach 10, das mit einem Schiebedachsystem versehen ist. Das Schiebedachsystem weist eine Dachöffnung 12 in einem festen Dachteil auf.

Die Dachöffnung 12 kann durch einen parallel zur Längsrichtung des Fahrzeugs verschiebbaren Deckel 14 teilweise oder vollständig freigelegt werden. Ferner kann der Deckel 14 in eine Lüfterstellung ausgestellt werden, indem ein hinterer Rand 16 des Deckels 14 angehoben wird. Eine Seitenblende 18 ist unterhalb des Deckels 14 angeordnet und erstreckt sich, wenn sich der Deckel 14 in der Lüfterstellung befindet, an Seitenrändern 20, 22 des Deckels 14 nach unten und deckt somit den Spalt zwischen dem Deckel 14 und einer Führungsschiene 28 ab. Die Führungsschienen sind wesentlicher Bestandteil eines Rahmens, der die Bauteile des Schiebedachsystems verbindet und z.B. einen Antriebsmotor, eine Wasserrinne, etc. enthalten kann.

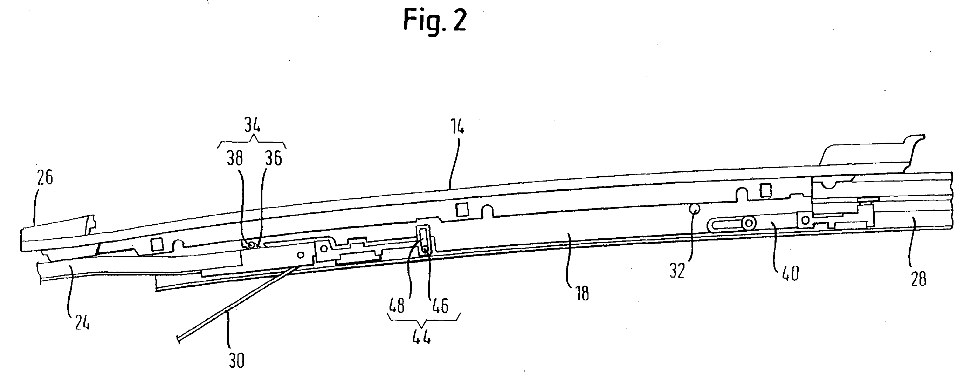

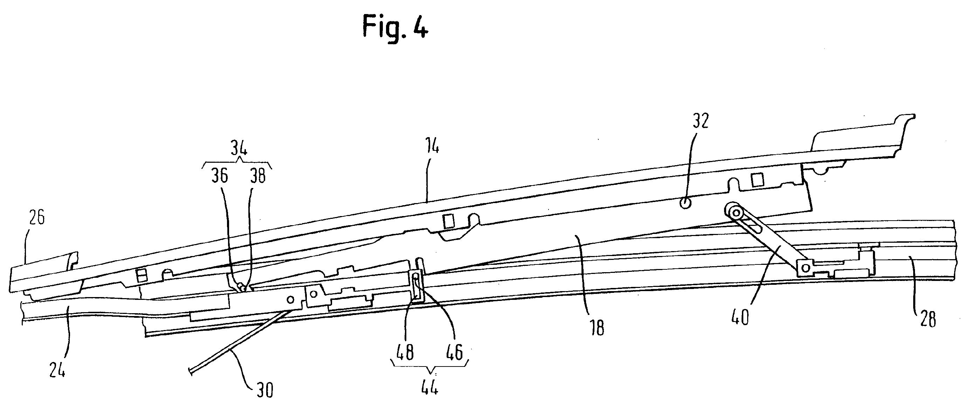

Am vorderen Rand 26 der Dachöffnung 12 ist ein Windabweiser 24 angeordnet (siehe insbesondere Fig. 2 und 4). Bei dem Windabweiser 24 handelt es sich um ein U-förmiges, starres Bauteil, der im Bereich der Seitenränder 20, 22 schwenkbar an einer Lagerstelle (nicht gezeigt) an der Führungsschiene 28 befestigt ist. Eine Windabweiserfeder 30, die an den Windabweiser 24 gekoppelt ist, kann ihn in die angehobene Stellung beaufschlagen. Der Windabweiser 24 hat die Funktion, die Strömungsverhältnisse dann zu verbessern, wenn sich der verstellbare Deckel 14 des Schiebedachsystems in einer zumindest teilweise geöffneten Stellung befindet.

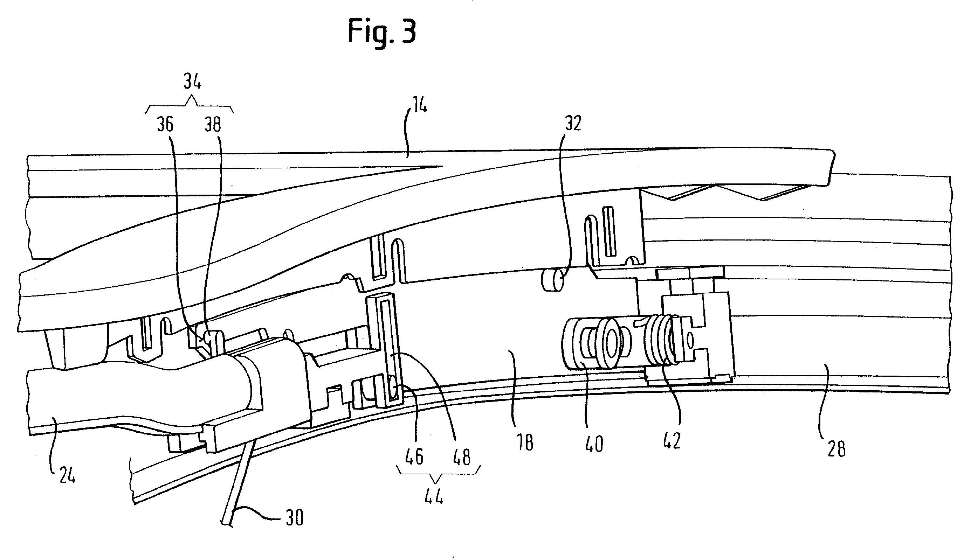

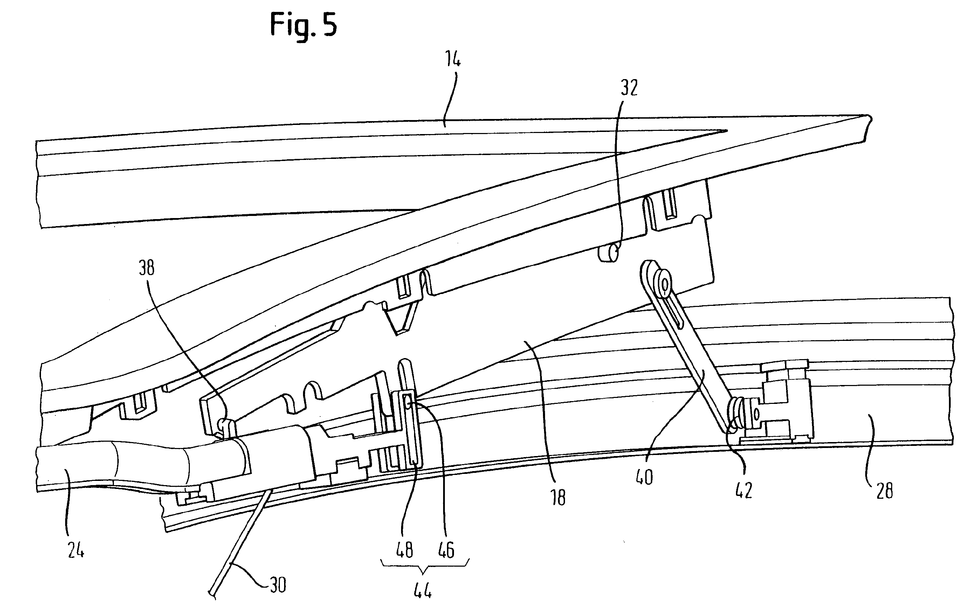

Bei der Seitenblende 18 handelt es sich vorzugsweise um ein Bauteil aus Kunststoff. Die Seitenblende 18 ist an ihrem vorderen Ende über eine Kulissenführung 34 an den Windabweiser 24 gekoppelt. Dabei weist die Seitenblende 18 eine Führungskulisse 36 auf, während der Windabweiser 24 einen Steuerstift 38 aufweist. Durch die von Führungskulisse 36 und Steuerstift 38 gebildete Kulissenführung 34 sind der Windabweiser 24 und die Seitenblende 18 begrenzt beweglich gekoppelt (siehe insbesondere Fig. 3 und 5).

Die Seitenblende 18 ist an ihrem hinteren Ende über einen Ausstellhebel 40 an die Führungsschiene 28 schwenkbar gekoppelt. Eine Ausstellfeder 42, die beispielsweise eine Schenkelfeder ist, ist an den Ausstellhebel 40 gekoppelt. Sie kann die Seitenblende 18 nach oben in die Abdeckstellung beaufschlagen.

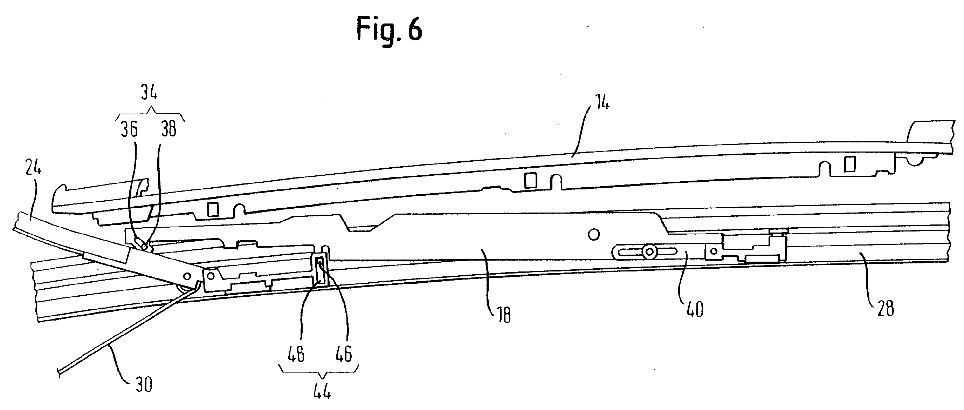

Die Seitenblende 18 ist darüber hinaus zwischen der Kulissenführung 34 und dem Ausstellhebel 40 über ein Widerlager 44 an die Führungsschiene 28 gekoppelt (siehe insbesondere Fig. 6). Das Widerlager 44 besteht aus einem Widerlagerzapfen 46, der an der Seitenblende 18 angebracht ist, und einem Langloch 48, das an der Führungsschiene 28 angeordnet ist. Durch das Langloch 48 ist eine senkrechte Bewegung des Widerlagerzapfens 46 möglich.

An der Seitenblende 18 ist in der Nähe des Ausstellhebels 40 ein Anschlag 32 angeordnet. Die Funktion des Anschlags 32 wird später erläutert.

Die Figuren 2 und 3 zeigen das Schiebedachsystem mit dem Deckel 14 in der geschlossenen Stellung. Der Anschlag 32 liegt am Deckel 14 an. Dadurch wird die Seitenblende 18 an ihrem hinteren Rand entgegen der Wirkung der Ausstellfeder 42 in der versenkten Stellung gehalten. Der vordere Abschnitt des Deckels 14 hält den Windabweiser 24 entgegen der Wirkung der Windabweiserfeder 30 in der versenkten Stellung. Aufgrund der Kopplung über die Kulissenführung 34 ist auch der vordere Abschnitt der Seitenblende 18 in ihrer versenkten Stellung gehalten.

Die Figuren 4 und 5 zeigen den Deckel in der Lüfterstellung. Das Ausstellen des Deckels 14 erfolgt motorisch und ist bekannt. In der Lüfterstellung befindet sich der vordere Rand des Deckels in einer nicht angehobenen Stellung. Dadurch hält der vordere Rand 26 des Deckels 14 den Windabweiser 24 weiterhin in der versenkten Stellung, und auch der vordere Abschnitt der Seitenblende 18 wird in der versenkten Stellung gehalten.

Da der hintere Rand 16 des Deckels 14 angehoben wurde, um die Lüfterstellung zu erreichen, konnte sich der Anschlag 32 an der Seitenblende 18 ebenfalls nach oben bewegen. Durch den Ausstellhebel 40, der mit der vorgespannten Ausstellfeder 42 gekoppelt ist, wurde die Seitenblende 18 mit ihrem hinteren Abschnitt nach oben in die in den Figuren 4 und 5 gezeigte Abdeckstellung bewegt. Die Seitenblende 18 ist somit dem Deckel 14 in die Lüfterstellung gefolgt, wobei der Anschlag 32 weiterhin am Deckel 14 anliegt. Durch die Bewegung in die Abdeckstellung ist der Widerlagerzapfen 46 des Widerlagers 44 in dem Langloch 48, das an der Führungsschiene 28 angebracht ist, nach oben bewegt worden.

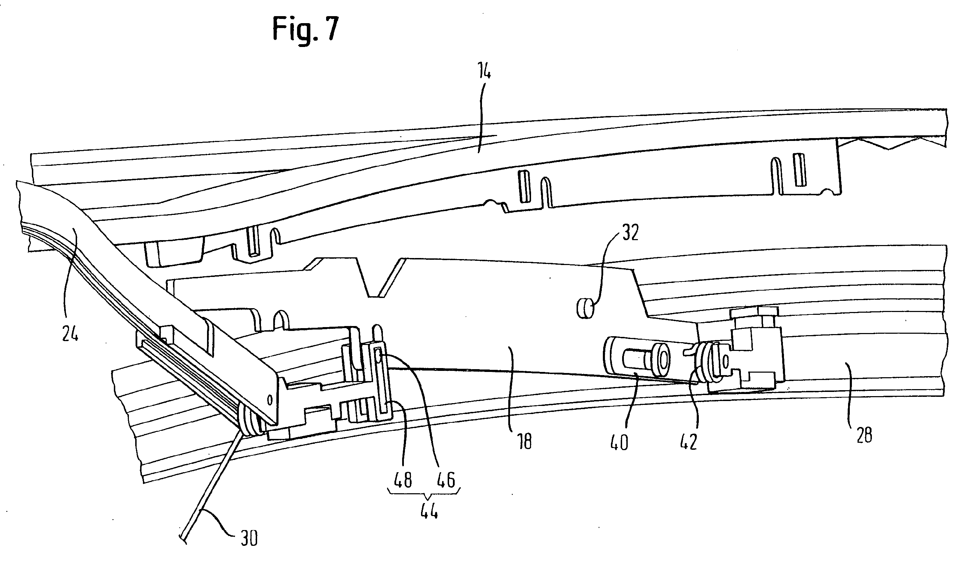

Die Figuren 6 und 7 zeigen das Schiebedachsystem mit dem Deckel 14 in einer geöffneten Stellung. Durch die Bewegung des Deckels 14 nach hinten wurde der Windabweiser 24 freigegeben. Dadurch konnte er von der vorgespannten Windabweiserfeder 30 nach oben bewegt werden. Dabei wurde der vordere Abschnitt der Seitenblende, aufgrund der Kopplung über die Kulissenführung 34, nach oben mitgenommen. Der Steuerstift 38 ermöglicht dabei zusammen mit der Führungskulisse 36 den notwendigen Längsausgleich. Da der Widerlagerzapfen 46, wenn der Windabweiser ausgestellt wird, bereits am oberen Ende des Langlochs 48 anliegt, wurde die Seitenblende um den Widerlagerzapfen 48 im Uhrzeigersinn geschwenkt; der hintere Abschnitt der Seitenblende 18 wurde dadurch entgegen der Wirkung der Ausstellfeder 42 nach unten bewegt, so daß die Seitenblende nun die in den Figuren 6 und 7 gezeigte Freigabestellung einnimmt. In der Freigabestellung ist die Seitenblende 18 von außen nicht sichtbar, da sie sich zwischen der Führungsschiene 28 und der Innendichtung (nicht gezeigt) befindet, und darüber hinaus verursacht sie somit keine störenden Nebengeräusche auf Grund der Windströmung.

Um die Ausgangsstellung nach Figur 2 erneut herzustellen, wird der Deckel 14 in die geschlossene Stellung gefahren. Dabei drückt er den Windabweiser 24 nach unten und spannt die Windabweiserfeder 30 vor, der Widerlagerzapfen 46 in dem Langloch 48 wird nach unten gedrückt, und der Steuerstift 38 wird in der Führungskulisse 36 bewegt. Der Windabweiser 24 und die Seitenblende 18 befinden sich somit erneut in der abgesenkten Stellung, wobei die Seitenblende 18 den Spalt zwischen Deckel 14 und Führungsschiene 28 beim Bewegen des Deckels 14 von der Lüfterstellung in die geschlossene Stellung wirksam bedeckt hat, um einen sicheren Einklemmschutz zu gewährleisten.

### Bezugszeichenliste

- 10: Fahrzeugdach
- 12: Dachöffnung
- 14: Deckel
- 16: hinterer Rand
- 18: Seitenblende
- 20: Seitenrand
- 22: Seitenrand
- 24: Windabweiser
- 26: vorderer Rand
- 28: Führungsschiene
- 30: Windabweiserfeder
- 32: Anschlag
- 34: Kulissenführung
- 36: Führungskulisse
- 38: Steuerstift
- 40: Ausstellhebel
- 42: Ausstellfeder
- 44: Widerlager
- 46: Widerlagerzapfen
- 48: Langloch

## Patentansprüche

1. Schiebedachsystem mit einem Rahmen, einem Deckel (14), der in eine Lüfterstellung verschiebbar ist, und einer Seitenblende (18), die sich in einer Abdeckstellung seitlich unterhalb des Deckels (14) erstreckt, **dadurch gekennzeichnet, daß** die Seitenblende (18) am Rahmen befestigt ist.

2. Schiebedachsystem nach Anspruch 1, **dadurch gekennzeichnet, daß** der Deckel (14) zwischen einer geschlossenen Stellung, der Lüfterstellung und einer geöffneten Stellung verschiebbar ist, daß die Seitenblende (18) zwischen einer versenkten Stellung, der Abdeckstellung, die sie einnimmt, wenn der Deckel (14) sich in der Lüfterstellung befindet, und einer Freigabestellung, die sie einnimmt, wenn der Deckel (14) sich in der geöffneten Stellung befindet, verstellbar ist und daß das Schiebedachsystem einen Windabweiser (24) aufweist, der zwischen einer versenkten und einer angehobenen Stellung verstellbar ist.

3. Schiebedachsystem nach Anspruch 2, **dadurch gekennzeichnet, daß** die Seitenblende (18) mit dem Windabweiser (24) gekoppelt ist.

4. Schiebedachsystem nach Anspruch 2 oder 3, **dadurch gekennzeichnet, daß** die Seitenblende (18) mit dem Windabweiser (24) durch eine Kulissenführung (34) gekoppelt ist.

5. Schiebedachsystem nach Anspruch 4, **dadurch gekennzeichnet, daß** die Kulissenführung (34) aus einem Steuerstift (38) am Windabweiser (24) und einer Führungskulisse (36) an der Seitenblende (18) besteht.

6. Schiebedachsystem nach Anspruch 2 bis 5, **dadurch gekennzeichnet, daß** der Windabweiser (24) von einer Windabweiserfeder (30) in die angehobene Stellung beaufschlagt wird.

7. Schiebedachsystem nach Anspruch 2 bis 6, **dadurch gekennzeichnet, daß** die Seitenblende (18) am vom Windabweiser (24) abgewandten Ende mit einem Anschlag (32) versehen ist, der am Deckel (14) in Anlage gelangen kann.

8. Schiebedachsystem nach Anspruch 7, **dadurch gekennzeichnet, daß** eine Ausstellfeder (42) vorgesehen ist, die das mit dem Anschlag (32) versehene Ende der Seitenblende (18) zum Deckel (14) hin beaufschlagt.

9. Schiebedachsystem nach Anspruch 8, **dadurch gekennzeichnet, daß** die Ausstellfeder (42) auf einen Ausstellhebel (40) einwirkt, der mit der Seitenblende (18) gekoppelt ist.

10. Schiebedachsystem nach Anspruch 8 oder 9, **dadurch gekennzeichnet, daß** die Ausstellfeder (42) eine Schenkelfeder ist.

11. Schiebedachsystem nach Anspruch 9 oder 10, **dadurch gekennzeichnet, daß** der Ausstellhebel (40) schwenkbar an einer Führungsschiene (28) angebracht ist.

12. Schiebedachsystem nach Anspruch 11, **dadurch gekennzeichnet, daß** zwischen der Kulissenführung (34) und dem Anschlag (32) ein Widerlager (44) vorgesehen ist, mittels dem die Seitenblende (18) mit der Führungsschiene (28) gekoppelt ist.

13. Schiebedachsystem nach Anspruch 12, **dadurch gekennzeichnet, daß** das Widerlager (44) die Seitenblende (18) schwenkbar und begrenzt verschiebbar aufnimmt.

14. Schiebedachsystem nach Anspruch 12 oder 13, **dadurch gekennzeichnet, daß** das Widerlager (44) gebildet ist durch einen Widerlagerzapfen (46) an der Seitenblende (18) und ein Langloch (48) an der Führungsschiene (28).
